# EUROPEAN PATENT SPECIFICATION

(11) **EP 4 086 874 B1**
(45) Date of publication and mention of the grant of the patent: **14.10.2026**
(21) Application number: 21744507.1
(22) Date of filing: 22.01.2021
(51) Int. Cl.: G06V 20/58, G06V 10/147, G08G 1/0962, H04N 23/73

(54) **CONTROL METHOD AND APPARATUS FOR INTELLIGENT VEHICLE, AND RELATED DEVICE**
VERFAHREN UND VORRICHTUNG ZUR STEUERUNG EINES INTELLIGENTEN FAHRZEUGS UND ZUGEHÖRIGE VORRICHTUNG
PROCÉDÉ ET APPAREIL DE COMMANDE POUR UN VÉHICULE INTELLIGENT, ET DISPOSITIF ASSOCIÉ

(30) Priority: 23.01.2020 CN 202010077052
(43) Date of publication of application: 09.11.2022
(73) Proprietor: Yinwang Intelligent Technologies Co., Ltd., Shenzhen, Guangdong 518129 (CN)
(72) Inventor: LAI, Longzhen, Shenzhen, Guangdong 518129 (CN)
(74) Representative: Pfenning, Meinig & Partner mbB
(86) International application number: PCT/CN2021/073282
(87) International publication number: WO 2021/147995

(56) References cited:
- WO-A1-2019/039022
- WO-A1-2019/039022
- CN-A- 102 196 184
- CN-A- 106 303 308
- CN-A- 111 291 620
- JP-A- 2009 017 293
- US-A1- 2017 041 591
- US-A1- 2018 253 613
- US-A1- 2018 336 692
- US-A1- 2021 029 290

## Description

### TECHNICAL FIELD

This application relates to the computer field, and in particular, the invention relates to an intelligent vehicle control method and apparatus and a related device.

### BACKGROUND

In recent years, intelligent vehicles have become a new trend of vehicle development, and systems such as driver assistance (driver assistance), automated driving (automated driving), or intelligent network driving (intelligent network driving) are more frequently used in the vehicles. Such systems sense an ambient environment in a driving process by using image collection devices and vehicle-mounted sensors such as radars. Accuracy of sensing surrounding obstacles and the infrastructure by the intelligent vehicle affects planning and control of the intelligent vehicle. Recognition of a signal identifier (for example, a traffic light) on an electronic display apparatus is a key step in implementing automated driving of the intelligent vehicle.

However, the electronic display apparatus is periodically turned on and off in a working process. When the image collection device collects an image, the electronic display apparatus may be in an off state in the collected image. Therefore, a recognition result of the intelligent vehicle to recognize the signal identifier based on the collected image is inconsistent with a result actually indicated by the electronic display apparatus (a result observed by human eyes). Therefore, how to provide a more accurate signal identifier recognition method to control the intelligent vehicle based on the recognition result becomes an urgent technical problem to be resolved.
WO 2019/039022 A1 relates to an imaging device and apparatus.
US 2017/041591 A1 relates to a vehicle mounted image recognition device, which allegedly improve the performance in flashing light sources recognition.

### SUMMARY

The object of the present invention is to provide an intelligent vehicle control method and apparatus and a related device. The method can increase a probability that a recognition result obtained based on an image collected by an image collection device is consistent with a result actually indicated by a signal identifier, to further improve accuracy and security of controlling an intelligent vehicle based on the recognition result. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides an intelligent vehicle control method. The method includes: A controller calculates target values of collection parameters of an image collection device in an intelligent vehicle when the controller recognizes a display apparatus for a signal identifier, where the collection parameters of the image collection device are used to indicate a collection period, a quantity of exposure times, exposure duration, and exposure interval duration that are of the image collection device to collect an image; the controller sends an adjustment instruction to the image collection device, where the adjustment instruction indicates the image collection device to adjust the collection parameters based on target values of collection parameters in the adjustment instruction; and the controller recognizes the signal identifier based on an image obtained after the image collection device adjusts the collection parameters, and controls driving of the intelligent vehicle based on the recognized signal identifier.

In implementing the foregoing intelligent vehicle control method, when the image collection device can collect the signal identifier, the controller calculates the target values of the collection parameters of the image collection device, and adjusts collection parameters of the image collected by the image collection device, to increase a quantity of exposure times when the image collection device collects one image, and increase a probability that exposure time of the image collection device overlaps time when a traffic light is on. This increases a probability that the traffic light is in an on state in the image collected by the image collection device, and increases a probability that a recognition result obtained by the controller based on the image is consistent with a result actually indicated by the signal identifier, to further improve accuracy and security of controlling the intelligent vehicle based on the recognition result.

In a possible implementation, the controller may be a controller in a mobile data center (MDC) in the vehicle.

In another possible implementation, that the controller calculates the target values of the collection parameters of the image collection device in the intelligent vehicle when the controller recognizes the display apparatus for the signal identifier includes: The controller obtains an image obtained before the image collection device adjusts the collection parameters, and performs signal identifier detection on the image obtained before the image collection device adjusts the collection parameters, and the controller calculates the target values of the collection parameters of the image collection device in the intelligent vehicle when detecting the signal identifier; or the controller obtains a distance between the intelligent vehicle and the display apparatus, and the controller calculates the target values of the collection parameters of the image collection device in the intelligent vehicle when the distance is less than or equal to a preset distance, where the display apparatus is located in a heading direction along which the intelligent vehicle is driven.

The controller determines, based on the image collected by the image collection device or the distance between the display apparatus and the intelligent vehicle, whether the image collection device can collect an image displaying the display apparatus. When determining that the image displaying the display apparatus can be collected, the controller starts to calculate the target values of the collection parameters and generate the adjustment instruction, to further adjust the collection parameters of the image collection device. Because the adjustment instruction is used to increase a quantity of exposure times of the image collection device to collect one image or a frequency of collecting an image, only when the image collection device can collect an image, the adjustment is performed, to reduce a workload of the image collection device.

In another possible implementation, that the controller calculates the target values of the collection parameters of the image collection device in the intelligent vehicle includes: The controller obtains an on/off period of the display apparatus and duration in which the signal identifier is on in an on/off period, where the on/off period includes duration in which the signal identifier is on and duration in which the signal identifier is off; the controller determines the on/off period to be a collection period obtained after the image collection device adjusts the collection parameters, where the collection period is duration taken by the image collection device to collect one image; the controller determines, based on the collection period obtained after the image collection device adjusts the collection parameters, total exposure duration of the image collection device in one collection period, and the duration in which the signal identifier is on in one on/off period, a quantity of exposure times in one collection period obtained after the image collection device adjusts the collection parameters; the controller determines, based on the total exposure duration in one collection period and the quantity of exposure times in one collection period that are obtained after the image collection device adjusts the collection parameters, duration of each exposure obtained after the image collection device adjusts the collection parameters; the controller determines, based on the collection period, the total exposure duration, and the quantity of exposure times that are obtained after the image collection device adjusts the collection parameters, interval duration of each exposure obtained after the image collection device adjusts the collection parameters; and the controller generates the adjustment instruction based on the collection period, the duration of each exposure, the quantity of exposure times in one collection period, and the interval duration of each exposure that are obtained after the image collection device adjusts the collection parameters.

By implementing the foregoing method, the collection period of the image collection device is adjusted to be equal to the on/off period of the display apparatus, and the exposure interval duration is less than duration in which the display apparatus is on in one on/off period. It can be ensured that exposure time of at least one of a plurality of exposures of the image collection device in one collection period overlaps time at which the traffic light is on, and the traffic light is in an on state in each image collected by the image collection device.

In another possible implementation, after the controller determines, based on the collection period obtained after the image collection device adjusts the collection parameters, the total exposure duration of the image collection device in one collection period, and the duration in which the signal identifier is on in one on/off period, that the image collection device adjusts the collection parameters, the quantity of exposure times in one collection period is specifically a quantity of exposure times in one collection period that is determined according to the following formula after the image collection device adjusts the collection parameters: (T2-T_{2b})/n<Tₒₙ and n≤T2/Tₒₙ, where n is the quantity of exposure times in one collection period after the image collection device adjusts the collection parameters, T2 is the collection period obtained after the image collection device adjusts the collection parameters, T_{2b} is the total exposure duration in one collection period obtained after the image collection device adjusts the collection parameters, and tₒₙ indicates the duration in which the signal identifier is on in one on/off period.

In another possible implementation, the signal identifier is the traffic light, and that the controller recognizes the signal identifier based on the image obtained after the image collection device adjusts the collection parameters, and controls driving of the intelligent vehicle based on the recognized signal identifier includes: The controller recognizes the traffic light based on the image obtained after the image collection device adjusts the collection parameters, to obtain a recognition result, where the recognition result includes a red light, a green light, an amber light, and an unknown state, and a recognition result corresponding to each image is any one of the red light, the green light, the amber light, and the unknown state; and the controller determines, based on the recognition result and a previously determined status of the traffic light, a status of the traffic light in the image obtained after the image collection device adjusts the collection parameters, where the status of the traffic light includes the red light, the green light, and the amber light, and a status of the traffic light corresponding to each image is any one of the red light, the green light, and the amber light.

According to a second aspect according to the invention, this application provides an intelligent vehicle control apparatus, where the apparatus includes modules configured to perform the intelligent vehicle control method in the first aspect or any possible implementation of the first aspect.

According to a third aspect according to the invention, this application provides a computing device, including a processor and a memory, where the memory is configured to store instructions, the processor is configured to execute the instructions, and when executing the instructions, the processor performs the method described in the first aspect or any specific implementation of the first aspect.

According to a fourth aspect according to the invention, this application provides a non-transient computer-readable storage medium, where the computer-readable storage medium stores a computer program, and when the computer program is executed by a computing device, the method described in the first aspect or any specific implementation of the first aspect is performed.

According to a fifth aspect not claimed, this application provides a computer program product including instructions. When the computer program product is run on a computer, the computer is enabled to perform the method described in the foregoing aspects.

In this application, based on the implementations provided in the foregoing aspects, the implementations may be further combined to provide more implementations.

In the following description, features which in the above summary of the invention have been marked as "not claimed" are also hereinafter, when they are described and explained with reference to the drawings, to be understood as "not claimed" or "not part of the invention".

### BRIEF DESCRIPTION OF DRAWINGS

FIG. 1 is a diagram of a system architecture of an intelligent vehicle according to this application;
FIG. 2 is a schematic flowchart of an intelligent vehicle control method according to this application;
FIG. 3 is a schematic diagram of a relationship between an on/off period of a display apparatus and a collection period of an image collection device according to this application;
FIG. 4 is a schematic diagram of a vehicle coordinate system according to this application;
FIG. 5 is a schematic diagram of a position relationship between a vehicle coordinate system and a traffic light according to this application;
FIG. 6 is a schematic diagram of a structure of a control apparatus according to this application; and
FIG. 7 is a schematic diagram of a structure of a computing device according to this application.

### DESCRIPTION OF EMBODIMENTS

The following describes in detail an intelligent vehicle control method provided in this application with reference to the accompanying drawings.

For ease of understanding the intelligent vehicle control method provided in this application, an operating principle of a display apparatus is first described. After a display apparatus (for example, a light emitting diode (LED) display) configured to display a signal identifier is energized, the display apparatus is periodically turned on or off. To be specific, the display apparatus is on for a period of time and then turned off for a period of time, and then turned on for another period of time and turned off for another period of time. Duration in which the display apparatus is on each time is the same, and duration in which the display apparatus is off each time is the same. A sum of duration in which the display apparatus is on once and duration in which the display apparatus is off once is referred to as an on/off period of the display apparatus. Usually, the on/off period of the display apparatus is 1/60 s to 20 ms (millisecond, ms), that is, the on/off frequency of the display apparatus is 50 Hz (Hertz, Hz) to 60 Hz. Duration in which the display apparatus is on in one on/off period usually accounts for 10% to 20% of the on/off period. For example, if the on/off period of the display apparatus is 20 ms, in one on/off period, duration in which the display apparatus is on is 2 ms to 4 ms, and duration in which the display apparatus is off is 16 ms to 18 ms. The signal identifier includes prompt information displayed on the display apparatus that is periodically turned on or off. The prompt information includes but is not limited to a traffic light, and a traffic prompt with a text or a symbol.

In an intelligent vehicle, a vehicle-mounted image collection device collects an image of the display apparatus, to determine an identifier displayed on the display apparatus. Usually, in a collection process, the image collection device needs to obtain the image of the display apparatus through an exposure. The exposure is a process in which light emitted or reflected by a photographed object is projected onto a negative or a photosensitive element by using a lens of the image collection device, and is imaged on the negative or the photosensitive element. Duration taken by the image collection device to collect one image is one collection period. The collection period includes exposure duration and exposure interval duration. The exposure duration is duration from time when a shutter of the image collection device is turned on to time when the shutter of the image collection device is turned off. The image collection device completes one exposure process within the exposure duration. The exposure interval duration is duration that elapses after the shutter of the image collection device is closed once and before the shutter of the image collection device is opened next time. For example, if a collection frequency at which the image collection device collects an image is 30, it indicates that the image collection device collects 30 images per second, and a collection period corresponding to each image is 33.33 ms, where the exposure duration is 10 ms and the exposure interval duration is 23.33 ms. The collection frequency indicates a quantity of images collected by the image collection device per second.

In the intelligent vehicle, a detection and recognition system based on machine vision is an indispensable part of the intelligent vehicle. The intelligent vehicle collects an image of an ambient environment in a driving process and analyzes the image by using the vehicle-mounted image collection device, to implement perception of the ambient environment of the vehicle in the driving process. This provides reliable data for the intelligent vehicle. For example, a controller of a vehicle-mounted mobile data center (MDC) detects and recognizes, based on the image collected by the image collection device, an identifier displayed on the display apparatus such as a traffic light, a traffic sign (left turn and right turn), and a speed limiting sign, and then controls driving of the intelligent vehicle based on a recognition result.

However, because the display apparatus is periodically turned on or off, the display apparatus and the image collection device are two different devices, and a trigger time point at which the display apparatus is on and a trigger time point at which the image collection device performs the exposure cannot be synchronously controlled, exposure time at which the image collection device collects an image does not overlap time at which the display apparatus is on. Therefore, in the image collected by the image collection device, the display apparatus is in an off state. A current display apparatus is designed for recognition by human eyes, and visual persistence effect of the human eyes is considered. A result to be actually indicated by the display apparatus is consistent with a recognition result of the human eyes. Although the display apparatus is periodically turned on or off, because the on/off period is relatively short, a recognition result of the human eye is that the display apparatus is in an on state. Therefore, a recognition result obtained by the controller based on the image collected by the image collection device may be inconsistent with a result actually indicated by the display apparatus. If the controller of the MDC controls driving of the intelligent vehicle based on the recognition result of the collected image, the intelligent vehicle may violate a traffic rule or even encounter a safety accident.

To resolve the foregoing problem, this application provides the intelligent vehicle control method. In the driving process of the intelligent vehicle, collection parameters of the image collection device are dynamically adjusted, to effectively recognize a signal identifier displayed on the display apparatus, where the collection parameters include a collection period, a quantity of exposure times, exposure duration, and exposure interval duration that are of the image collection device to collect one image. When the image collection device on the intelligent vehicle can collect a signal identifier image on the display apparatus, by increasing the quantity of exposure times of the image collection device to collect one image, or a collection frequency of the image collection device to collect an image and the quantity of exposure times of collecting one image, a time interval between two adjacent exposures of the image collection device is shortened, and an overlapping proportion between exposure time of the image collection device and time at which the signal identifier is on is increased. This increases a proportion that the signal identifier is in an on state in the image collected by the image collection device, and increases a probability that a recognition result of the controller is the same as a result actually indicated by the signal identifier, so that safety of the intelligent vehicle is improved. When the image collection device of the intelligent vehicle cannot collect the image of the display apparatus, the collection parameters of the image collection device are adjusted to collection parameters of the image collection device when the image collection device cannot collect the signal identifier image on the display apparatus.

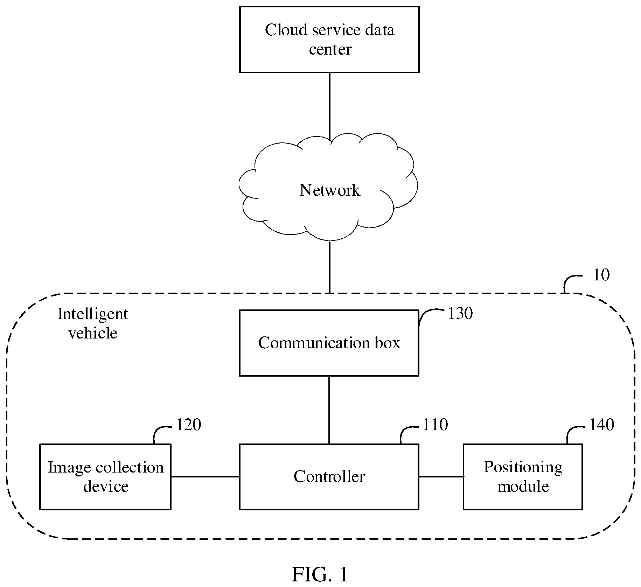

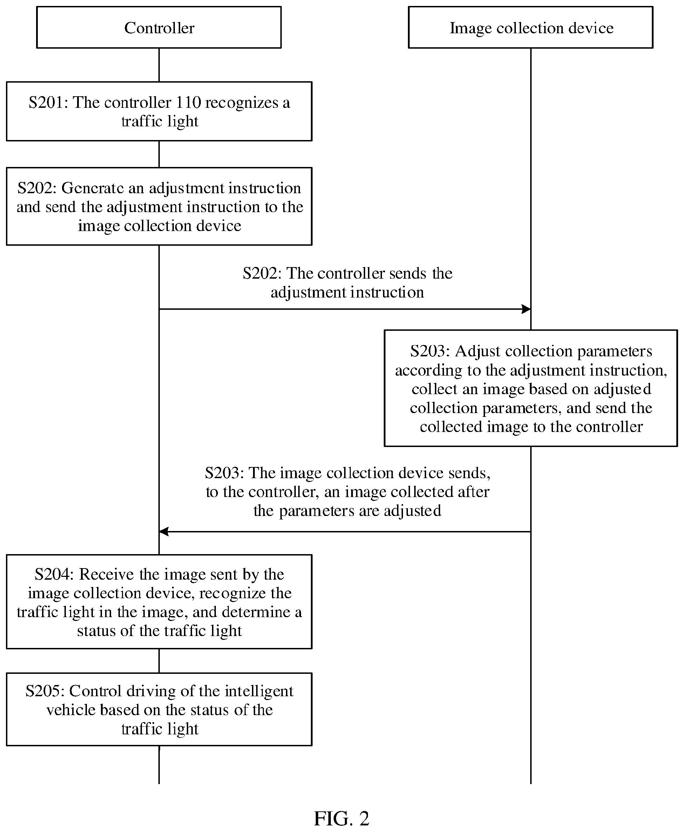

The following describes in detail the intelligent vehicle control method provided in this application by way of an example in which the display apparatus is an LED display apparatus and the signal identifier is a traffic light. FIG. 1 is a diagram of a system architecture of an intelligent vehicle provided in this application. The intelligent vehicle 10 includes a controller 110, an image collection device 120, a communication box 130, and a positioning module 140. The image collection device 120, the communication box 130, and the positioning module 140 are all communicatively connected to the controller 110. The controller communicates with a cloud service data center or another device by using the communication box 130 and a network. FIG. 2 is a schematic flowchart of an intelligent vehicle control method provided in this application. The method includes S201 to S205.

S201: The controller 110 recognizes the traffic light.

In a possible implementation, that the controller 110 recognizes the traffic light means that the controller recognizes whether the traffic light exists in an image collected by the image collection device 120. In a driving process of the intelligent vehicle 10, when the controller 110 does not recognize the traffic light in the image collected by the image collection device, the image collection device collects an image at a first collection frequency and sends the collected image to the controller 110, and the controller 110 performs traffic light detection on the received image, to determine whether the traffic light exists in the image. If the traffic light exists in the image, the controller 110 performs S202; or if the traffic light does not exist in the image, the controller 110 continues to receive an image sent by the image collection device 120 and performs traffic light detection.

In another possible implementation, that the controller 110 recognizing the traffic light means recognizing a distance between the traffic light and the intelligent vehicle 10, to determine, based on the distance, whether the traffic light exists in the image collected by the image collection device 120. The controller 110 may determine, based on location information of the intelligent vehicle provided by the positioning module 140 and map data, whether the traffic light can be detected in the image collected by the image collection device 120. Specifically, the map data includes location information of the traffic light. The controller 110 obtains current location information of the intelligent vehicle provided by the positioning module 140 and location information of the traffic light on a driving route in the map data, and determines a distance between the intelligent vehicle and a nearest traffic light on the driving route. When determining that the distance between the intelligent vehicle and the nearest traffic light on the driving route is less than or equal to a preset distance, the controller 110 determines that the traffic light can be detected in the image collected by the image collection device 120. The preset distance may be a distance, for example, 50 m, 100 m, or 200 m, between the image collection device 120 and a target object when the target object is distinctly recognized based on the image collected by the image collection device 120. This is not specifically limited in this embodiment of this application.

It should be noted that when the controller 110 does not detect the traffic light and the image collection device 120 collects the image at the first collection frequency, a collection period of the image collection device 120 to collect one image is a first collection period T1 and the image collection device 120 collects one image through one exposure. To be specific, a quantity of first exposure times of the image collection device 120 is 1, exposure duration of the image collection device 120 to collect one image is first exposure duration t_{1b}, and exposure interval duration is first exposure interval duration t_{1g}. For example, if the first collection frequency at which the image collection device 120 collects an image is 30, the first collection period is 33.33 ms, where the first exposure duration may be 10 ms, and the first exposure interval duration is 23.33 ms.

S202: The controller 110 generates adjustment instruction and sends the adjustment instruction to the image collection device 120.

After the image collection device 120 can collect an image of the traffic light, the controller 110 obtains display parameters of a display apparatus displaying the traffic light. The display parameters include an on/off period of the display apparatus and duration in which the traffic light is on in each on/off period. The controller 110 calculates collection parameters based on the display parameters of the display apparatus, generates the adjustment instruction based on the collection parameters, and sends the adjustment instruction to the image collection device 120. The adjustment instruction indicates the image collection device 120 to adjust a current value of each collection parameter to a value corresponding to each collection parameter in the adjustment instruction. The collection parameters include a collection period, a quantity of exposure times, exposure duration, and exposure interval duration. The adjustment instruction includes a second collection period T₂, a quantity n of second exposure times, second exposure duration t_{2b}, and second exposure interval duration t_{2g} that are of the image collection device 120. The quantity of exposure times indicates a quantity of exposure times of the image collection device 120 to collect one image. The quantity n of second exposure times is a positive integer greater than 1, and the quantity n of second exposure times indicates a quantity of exposure times needed by the image collection device 120 to collect one image after the image collection device adjusts the collection parameters according to the adjustment instruction. The second exposure duration t_{2b} indicates duration of each exposure when a plurality of exposures are needed to collect one image after the image collection device 120 adjusts the collection parameters according to the adjustment instruction. The adjustment instruction indicates the image collection device 120 to adjust single exposure in one collection period to n exposures based on the quantity n of second exposure times, adjust duration of each exposure from the first exposure duration to the second exposure duration based on the second exposure duration, and adjust the exposure interval duration from the first exposure interval duration to the second exposure interval duration based on the second exposure interval duration. It should be noted that when the image collection device 120 receives the adjustment instruction, the image collection device 120 obtains one image through single exposure, and duration of single exposure is the first exposure duration. After receiving the adjustment instruction and adjusting the duration of single exposure from the first exposure duration to the second exposure duration, the image collection device 120 obtains one group of exposure data through each exposure by using the second exposure duration as exposure duration of the image collection device 120, and converges data obtained by using the second exposure duration of the n exposures as the exposure duration, to obtain one image. In other words, after the image collection device 120 adjusts the exposure duration and the exposure interval duration according to the adjustment instruction, the image collection device 120 can obtain one image only after data obtained through a plurality of consecutive exposures are converged. Data convergence is to converge data obtained through a plurality of exposures, to finally obtain one image. During specific implementation, a data convergence method in the conventional technology may be used. This is not limited in this application.

When calculating the collection parameters based on the display parameters of the display apparatus, the controller 110 first determines, based on the obtained on/off period of the display apparatus, to adjust the second collection period T2 of the image collection device 120 to be the same as the on/off period of the display apparatus. If the controller 110 specifies total exposure duration of the image collection device 120 in one second collection period to T_{2b}, total exposure interval duration in the second collection period is T₂-T_{2b}. To ensure that the second exposure interval duration t_{2g} is less than duration Tₒₙ in which the traffic light is on in one on/off period, the quantity n of exposure times in one collection period meets (T₂-T_{2b})/n<Tₒₙ, that is, n>(T₂-T_{2b})/Tₒₙ, the second exposure duration of the image collection device 120 is t_{2b}=T_{2b}/n, and the second exposure interval duration is t_{2g}=(T₂-T2b)/n. It may be understood that, to prevent a value of the quantity n of exposure times from being excessively large, n≤T₂/Tₒₙ may be set, that is, (T₂-T_{2b})/Tₒₙ<n≤T₂/Tₒₙ. The total exposure duration T_{2b} in the second collection period T₂ may be the same as the first exposure duration t_{1b}, may be longer than the first exposure duration t_{1b}, or may be shorter than the first exposure duration t_{1b}. This is not specifically limited in this embodiment of this application.

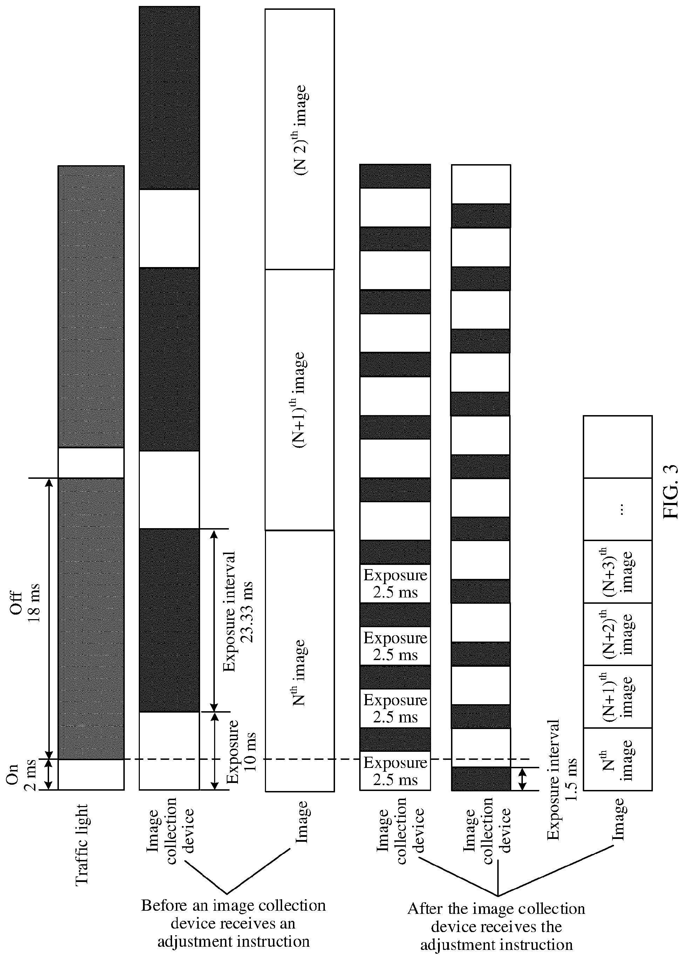

For example, as shown in FIG. 3, if an on/off period in which the display apparatus is on and off once is 20 ms, in one on/off period, the duration in which the traffic light is on is 2 ms, and the duration in which the traffic light is off is 18 ms. Before the image collection device receives the adjustment instruction, the first collection period of the image collection device 120 is 33.33 ms, the first exposure duration of the image collection device 120 is 10 ms, and the first exposure interval duration is 23.33 ms. When the image collection device 120 collects a traffic light image based on the first collection period, in some collection periods, exposure time of the image collection device 120 overlaps time at which the traffic light is on, and the traffic light is in an on state in the image. However, in some collection periods, exposure time of the image collection device 120 does not overlap the time at which the traffic light is on. As a result, the traffic light is in an off state in the image collected by the image collection device 120. For example, in FIG. 3, if exposure time of the image collection device 120 in collection periods corresponding to an N^{th} image and an (N+1)^{th} image overlaps the time at which the traffic light is on, the traffic light is in an on state in the N^{th} image and the (N+1)^{th} image. However, in a collection period corresponding to an (N+2)^{th} image, the exposure time of the image collection device 120 does not overlap the time at which the traffic light is on. In this case, the traffic light is in an off state in the (N+2)^{th} image. N is a positive integer greater than or equal to 1.

After determining that the traffic light image can be collected, the controller 110 adjusts the first collection period 33.33 ms of the image collection device 120 to the second collection period 20 ms. The controller 110 adjusts total exposure duration of the image collection device 120 in one collection period to 12.5 ms, and adjusts the second exposure interval duration to 7.5 ms. To make the exposure interval duration less than 2 ms, the controller 110 splits the exposure duration of 12.25 ms into five parts. In this case, each second exposure duration of the image collection device 120 is 2.5 ms, and the exposure interval duration is 1.5 ms. The image collection device 120 completes one exposure by opening the shutter for 2.5 ms, and then opens the shutter again for 2.5 ms after an interval of 1.5 ms. The image collection device 120 adjusts the first exposure duration to the second exposure duration. After opening and closing the shutter for a fifth time, the image collection device converges data obtained through previous five exposures to obtain one image, and sends the image to the controller 110. After opening and closing the shutter for the fifth time, the image collection device 120 opens the shutter again after an interval of 1.5 ms. To be specific, after opening and closing the shutter for a 5m^{th} time, the image collection device 120 converges data obtained through five exposures between a (5m-4)^{th} time and the 5m^{th} time, to obtain one image, and sends the image to the controller 110, where m is a positive integer. As shown in FIG. 3, the second exposure interval duration is less than the duration in which the traffic light is on in one on/off period. In this case, even if a time point at which the traffic light is turned on is the same as a time point at which an exposure ends, because the duration in which the traffic light is on is longer than the exposure interval duration, the traffic light is still turned on when the image collection device 120 performs next exposure. Therefore, it can be ensured that there is an overlapping part between exposure duration in one collection period and the duration in which the traffic light is on. In the foregoing example, an overlap time between the exposure duration in an image collection period and the duration in which the traffic light is on is 0.5 ms to 2 ms. It should be noted that the foregoing example is merely used as an example, and cannot be understood as a specific limitation.

According to the foregoing method, the second collection period of the image collection device 120 is adjusted to be the on/off period of the display apparatus, and the second exposure interval duration is adjusted to be less than duration in which the display apparatus is on in one on/off period. It can be ensured that exposure time of at least one of the n exposures of the image collection device 120 in one collection period overlaps time at which the traffic light is on, and that the traffic light is in an on state in an image obtained by converging data of the n exposures, that is, it can be ensured that the traffic light is in an on state in each image output by the image collection device 120.

A method by which the controller 110 obtains display parameters of the display apparatus displaying the traffic light includes but is not limited to the following three manners: In a first manner, a sending module is configured in the display apparatus, and periodically broadcasts the on/off period of the display apparatus and the duration in which the traffic light is on in one on/off period; and all intelligent vehicles approaching the display apparatus can receive data sent by the sending module, to obtain the display parameters of the display apparatus. In a second manner, after determining that an image of the traffic light can be collected, the controller 110 sends an obtaining request to the display apparatus through the communication box 130, where the obtaining request is used to obtain the display parameters; and after receiving the obtaining request, the display apparatus sends the display parameters to the communication box 130. In a third manner, after the controller 110 determines that an image of the traffic light can be collected, the controller 110 sends an obtaining request to a cloud service data center through the communication box 130, where the obtaining request is used to obtain the display parameters, and the obtaining request includes location information of the display apparatus; and after receiving the obtaining request, the cloud service data center determines a display apparatus corresponding to a location relationship in the obtaining request based on the location information in the obtaining request and a correspondence that is between location information stored in the cloud service data center and the display apparatus, then collects display parameters of the display apparatus corresponding to the location information, and sends the display parameters to the controller 110.

S203: The image collection device 120 receives the adjustment instruction, adjusts the collection parameters according to the adjustment instruction, collects an image based on adjusted collection parameters, and sends the collected image to the controller 110.

After receiving the adjustment instruction sent by the controller 110, the image collection device 120 adjusts the collection period, the quantity of exposure times, the exposure duration, and the exposure interval duration that are of the image collection device 120, to collect an image by using the adjusted collection parameters. The image collection device 120 performs a plurality of exposures in one collection period, then converges data obtained through the plurality of exposures, to obtain one image collected in the collection period, and sends the image to the controller 110. It may be understood that, to enable the controller 110 to determine, based on the image, whether the traffic light is a red light, an amber light, or a green light, the image collected by the image collection device 120 is a color image, for example, an image in a red green blue (red green blue, RGB) color mode.

S204: The controller 110 receives the image sent by the image collection device 120, recognizes the traffic light in the image, and determines a status of the traffic light.

After receiving the image collected by the image collection device 120, the controller 110 first determines location information of the traffic light in the image. The location information is coordinate values of four pixels in the image, for example, the coordinate values of the four pixels are respectively (u1, v1), (u1, v2), (u2, v1), and (u2, v2). An initial rectangular region determined by the four pixels includes the traffic light. The controller 110 determines, based on the location information of the traffic light in the image, a region of interest that includes the traffic light in the image. For example, the controller uses the initial rectangular region as the region of interest, determines four new pixel coordinates based on the four pixel coordinates, or uses a new rectangular region obtained by expanding the initial rectangular region by a preset multiple as the region of interest, to prevent a case in which the initial rectangular region does not include a complete traffic light. For example, coordinates of the four new pixels are respectively (u1-1/2(u2-u1), v1-1/2(v2-v1)), (u1-1/2(u2-u1), v1+1/2(v2-v1)), (u1+1/2(u2-u1), v1-1/2(v2-v1)), and (u1+1/2(u2-u1), v1+1/2(v2-v1)). The initial rectangular region is enlarged by a factor of 4, to obtain the region of interest, and then the region of interest is captured as a target image. The target image is entered into a traffic light recognition network, to recognize a traffic light in the target image, so that a recognition result is obtained.

The recognition result obtained by the controller 110 based on the target image includes the red light, the green light, the amber light, and an unknown state. The unknown state indicates that the traffic light does not exist in the image or the traffic light is in an off state in the image. The controller 110 needs to determine the status of the traffic light, that is, whether the traffic light is the red light, the green light, or the amber light, to determine, based on the status of the traffic light, whether the intelligent vehicle needs to stop or decelerate. Therefore, after obtaining a result of recognizing a current image, the controller 110 needs to determine a status of the traffic light in the current image based on a state of the traffic light in an image previous to the current image, and determine that the status of the traffic light is any one of the red light, the green light, or the amber light. The controller can recognize the traffic light based on color information of the traffic light in the target image, and can recognize the traffic light in the target image through a trained neural network model for recognizing the traffic light, for example, a convolutional neural network (CNN) model and a recurrent neural network (recurrent neural network, RNN) model.

Specifically, if the recognition result of the controller 110 to recognize the current image is any one of the red light, the green light, and the amber light, the controller 110 uses the recognition result of the image as the status of the traffic light. If the recognition result of the controller 110 to recognize the current image is the unknown state, a state of the traffic light determined through an image previous to the current image is used as a status of the traffic light corresponding to the current image. For example, when the recognition result of the current image is the unknown state, if the status of the traffic light in the image previous to the current image is the green light, the green light is used as the status of the traffic light corresponding to the current image. The following Table 1 shows a method by which the controller 110 determines the status of the traffic light in the current image based on the recognition result of the current image and the state of the traffic light in the image previous to the current image. Any state in the table represents any one of the red light, the green light, the amber light, or the unknown state.

**Table 1**

| Status of traffic light in one image previous to current | Recognition result of current | Status of traffic |
|---|---|---|
| image | image | light |
| Any state | Green light | Green light |
| Any state | Amber light | Amber light |
| Any state | Red light | Red light |
| Green light | Unknown state | Green light |
| Amber light | Unknown state | Amber light |
| Red light | Unknown state | Red light |

In a possible implementation, in S204, after receiving the image sent by the image collection device 120, the controller 110 can detect the traffic light in the image, to determine location information of the traffic light in the image. For example, the controller 110 can determine the location information of the traffic light in the image based on the color information and/or shape information.

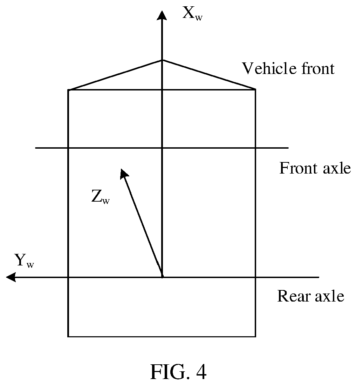

In another possible implementation, the controller 110 can further determine location information of the traffic light relative to the intelligent vehicle by using the positioning module 140 and the image data, determine coordinates of the traffic light relative to a vehicle coordinate system based on the location information of the traffic light relative to the intelligent vehicle, and then determine the location information of the traffic light in the image with reference to a conversion relationship between the vehicle coordinate system and a pixel coordinate system. The location information of the traffic light relative to the intelligent vehicle includes a distance of the traffic light relative to the vehicle, a height of the traffic light, a length of the traffic light, and a distance from the vehicle to a road edge. The height of the traffic light is a distance from a lower edge of the traffic light to a road surface, and the length of a traffic light is a distance from a left side of the traffic light (relative to the vehicle) to the road edge. Specifically, FIG. 4 is a schematic diagram of the vehicle coordinate system provided in this application. In a top view of a vehicle body shown in FIG. 4, in the vehicle coordinate system, a rear axle of the vehicle is used as a Y_{w} axis, a point at which the rear axle of the vehicle and a center line of an axle of the vehicle intersect is used as an origin of coordinates, the center line of the axle of the vehicle is used as an X_{w} axis, and a driving direction of the vehicle is used as a positive direction of the X_{w} axis, where a plane formed by X_{w}, O_{w}, and Y_{w} is parallel to a horizontal plane, a direction perpendicular to the plane formed by X_{w}, O_{w}, and Y_{w} is used as a direction of a Z_{w} axis, and an upward direction perpendicular to the plane formed by X_{w}, O_{w}, and Y_{w} is a positive direction of the Z_{w} axis.

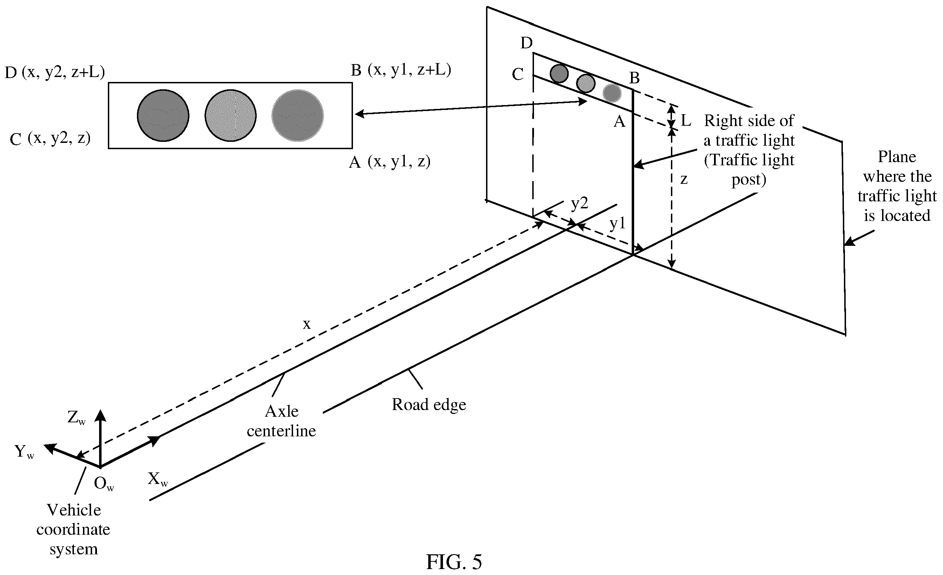

A location of the traffic light relative to the vehicle coordinate system can be determined based on the location information of the traffic light relative to the intelligent vehicle. For example, FIG. 5 is a schematic diagram of a location relationship between the vehicle coordinate system and the traffic light provided in this application. The distance of the traffic light relative to the vehicle is a coordinate value x of the traffic light on the X_{w} axis, the height of the traffic light is a coordinate value z of the traffic light on the Z_{w} axis, the distance from the vehicle to the road edge is a coordinate value y1 of a right side (relative to the vehicle) of the traffic light on the Y_{w} axis, a difference between the length of the traffic light and the distance from the vehicle to the road edge is a coordinate value y2 of a left side (relative to the vehicle) of the traffic light on the Y_{w} axis. Because the traffic light has a specific width L, coordinates of four vertices of a rectangular region including the traffic light in the vehicle coordinate system are respectively A (x, y1, z), B (x, y1, z+L), C (x, y2, z), and D (x, y2, z+L). The coordinates of the four coordinate points are coordinates of the traffic light in a three-dimensional coordinate system. Coordinates of the four coordinate points in the pixel coordinate system can be determined based on a conversion relationship between the vehicle coordinate system and the pixel coordinate system, that is, the location information of the traffic light in the image.

S205: The controller 110 controls driving of the intelligent vehicle based on the status of the traffic light.

After recognizing the status of the traffic light, the controller 110 controls driving of the intelligent vehicle based on the status of the traffic light. For example, when the status of traffic light is the green light, the intelligent vehicle is controlled to drive at a current speed; or when the status of the traffic light is the amber light or the red light, the intelligent vehicle is controlled to gradually decelerate to stop.

It may be understood that after the controller 110 recognizes the status of the traffic light according to the method in S201 to S205, and controls driving of the intelligent vehicle based on the status of the traffic light, when the controller 110 does not detect the display apparatus in the image collected by the image collection device 120, the controller generates a reply instruction and sends the reply instruction to the image collection device 120, and then the image collection device adjusts the collection parameters to values existing before the adjustment instruction is received.

In a possible implementation, after the controller 110 recognizes the traffic light by using the method in S201, the controller 110 cannot obtain the on/off period of the display apparatus and the duration in which the display apparatus is on in one on/off period. The controller 110 uses a common on/off period of the display apparatus as an on/off period of a display apparatus for a currently recognized traffic light, and uses common duration in which the display apparatus is on in one on/off period as duration in which the current traffic light is on in one on/off period. For example, a common on/off period of the display apparatus is 20 ms, and duration in which a light is on in one on/off period is 2 ms. In this case, it is considered that an on/off period of a current traffic light is set to 20 ms, and duration in which the traffic light is on in one on/off period is 2 ms. Then, according to a same method in S202 for determining the second collection period, the quantity of second exposure times, the second exposure duration, and the second exposure interval duration, the controller 110 determines the collection parameters adjusted by the image collection device 120.

In a possible implementation, after the controller 110 recognizes the traffic light by using the method in S201, the controller 110 cannot obtain the on/off period of the display apparatus and the duration in which the display apparatus is on in one on/off period. The controller 110 obtains a current first collection period of the image collection device 120. If the first collection period is less than or equal to a preset collection period, that is, a quantity of images collected by the image collection device 120 within a unit time is greater than or equal to a preset quantity, the controller 110 determines that the image collection device 120 keeps the first collection period unchanged. If the first collection period is greater than the preset collection period, that is, a quantity of images collected by the image collection device 120 in a unit time is less than a preset quantity, the controller 110 determines that the collection period of the image collection device 120 is reduced from the first collection period to the preset collection period. The preset collection period is an on/off period usually used by the display apparatus. For example, if the on/off period usually used by the display apparatus is 20 ms, a value of the preset collection period is 20 ms. In addition, the controller 110 uses, as duration in which a current traffic light is on in one on/off period at present, duration which is usually used by the display apparatus and in which the traffic light is on in one on/off period. According to the foregoing method, the controller 110 determines a collection period obtained after the image collection device 120 adjusts the collection parameters, and the duration in which the display apparatus is on in one on/off period. According to a same method in S202 for determining the second collection period, the quantity of second exposure times, the second exposure duration, and the second exposure interval duration, the controller determines the collection parameters adjusted by the image collection device 120, where the first collection period that is less than or equal to a first collection period obtained when the collection period is preset, or the second collection period when the first collection period is greater than the preset collection period, is the second collection period T2 calculated in S202. The preset collection period can be obtained through calculation based on statistical information of historical data, or can be an empirical value.

In a possible implementation, after the controller 110 recognizes the traffic light by using the method in S201, regardless of whether the controller 110 can obtain the on/off period of the display apparatus and the duration in which the display apparatus is on in one on/off period, the collection period, the quantity of exposure times, the exposure duration, and the exposure interval duration in the adjustment instruction generated by the controller 110 are all preset fixed values. For example, the collection period is 20 ms, the quantity of exposure times is 5, the exposure duration is 2.5 ms, and the exposure interval duration is 1.5 ms. After receiving the adjustment instruction, the image collection device 120 adjusts the collection parameters to the foregoing preset fixed values.

It should be noted that, for ease of description, the foregoing method embodiments are represented as a series of action combinations. However, a person skilled in the art should appreciate that the present invention is not limited to the described action sequence. In addition, a person skilled in the art should also appreciate that all the embodiments described in this specification are embodiments, and the related actions are not necessarily mandatory to the present invention.

Another appropriate step combination that a person skilled in the art can think of based on the content described above also falls within the protection scope of the present invention. In addition, a person skilled in the art should also appreciate that all the embodiments described in this specification are preferred embodiments, and the related actions are not necessarily mandatory to the present invention.

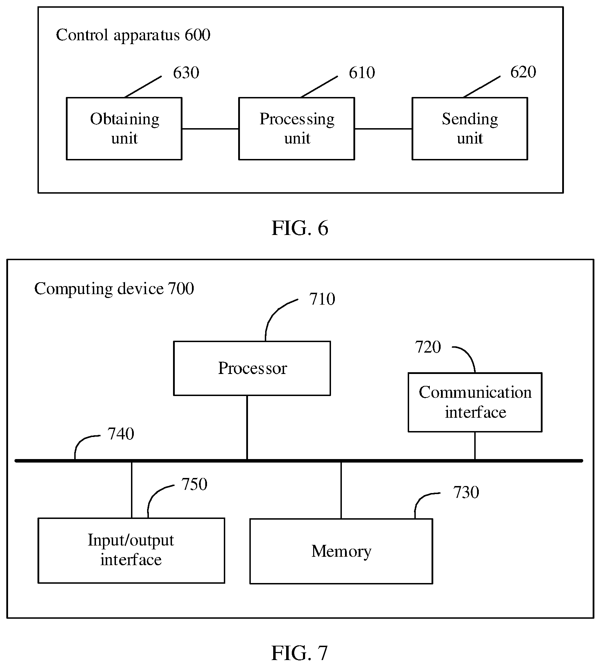

The foregoing describes in detail the intelligent vehicle control method provided in this application with reference to FIG. 1 to FIG. 5. The following describes apparatuses and related devices provided in this application with reference to FIG. 6 to FIG. 7.

FIG. 6 is a schematic diagram of a structure of an intelligent vehicle control apparatus provided in this application. The control apparatus is used in an intelligent vehicle that includes an image collection device and a positioning module. The image collection device is installed on the vehicle and is configured to collect an image of the vehicle in a driving direction. The control apparatus is connected to the image collection device, and is configured to receive an image collected by an image collection apparatus. The control apparatus 600 includes a processing unit 610, a sending unit 620, and an obtaining unit 630.

The processing unit 610 is configured to calculate target values of collection parameters of the image collection device in the intelligent vehicle when recognizing a display apparatus for a signal identifier, where the collection parameters of the image collection device are used to indicate a collection period, a quantity of exposure times, exposure duration, and exposure interval duration that are of the image collection device to collect an image. The processing unit 610 can obtain, through the obtaining unit 630, an image collected by the image collection device, recognize the display apparatus for the signal identifier based on the image collected by the image collection device, and recognize the display apparatus for the signal identifier based on a distance between a location provided by the positioning module and the signal identifier. Specifically, for recognizing the display apparatus for the signal identifier by the processing unit 610, refer to related descriptions of recognizing the display apparatus by the controller 110 in S201.

When recognizing the display apparatus for the signal identifier, the processing unit 610 determines that the collection parameters of the image collection device need to be adjusted. The image collection device obtains, through the obtaining unit 630, an on/off period of the display apparatus and duration in which the signal identifier displayed on the display apparatus is on in one on/off period, where the on/off period includes duration in which the signal identifier is on and duration in which the signal identifier is off. Then, the target values of the collection parameters of the image collection device, such as the collection period, the quantity of exposure times, the exposure duration, and the exposure interval duration, are calculated based on the on/off period of the display apparatus and the duration in which the signal identifier displayed on the display apparatus is on in one on/off period. Specifically, for a method for calculating the collection parameters by the processing unit 610, refer to related descriptions of calculating the collection parameters by the controller 110 in S202. Details are not described herein again.

The processing unit 610 generates an adjustment instruction based on the target values of the collection parameters. The adjustment instruction indicates the image collection device to adjust the collection parameters based on target values of collection parameters in the adjustment instruction.

The sending unit 620 is configured to send the adjustment instruction to the image collection device.

It should be understood that the control apparatus 600 in this embodiment of this application can be implemented by using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. When the control method shown in FIG. 2 can alternatively be implemented by using software, the control apparatus 600 and modules of the control apparatus 600 may also be software modules.

Optionally, the processing unit 610 is further configured to recognize the signal identifier based on an image obtained after the image collection device adjusts the collection parameters, and control driving of the intelligent vehicle based on the recognized signal identifier. For a method for recognizing the signal identifier by the processing unit 610 based on the image collected by the image collection device, refer to the method for recognizing the traffic light in S204. Details are not described herein again. After recognizing a status of the traffic light, the control apparatus 600 controls driving of the intelligent vehicle based on the status of the traffic light. For example, when the status of traffic light is a green light, the intelligent vehicle is controlled to drive at a current speed; or when the status of the traffic light is an amber light or a red light, the intelligent vehicle is controlled to gradually decelerate to stop.

Specifically, for operations performed by the control apparatus 600, refer to related operations performed by the controller 100 in the foregoing method embodiment, for example, recognizing the signal identifier, calculating the collection parameters, and recognizing the traffic light. Details are not described herein again.

FIG. 7 is a schematic diagram of a structure of a computing device provided in this application. The computing device 700 includes at least a processor 710, a communication interface 720, and a memory 730. The processor 710, the communication interface 720, and the memory 730 are connected to each other by using a bus 740. The processor 710 is configured to execute instructions stored in the memory 730. The memory 730 stores program code, and the processor 710 can invoke the program code stored in the memory 720 to perform the following operations:

When recognizing a display apparatus for a signal identifier, a controller calculates target values of collection parameters of an image collection device in an intelligent vehicle, where the collection parameters of the image collection device are used to indicate a collection period, a quantity of exposure times, exposure duration, and exposure interval duration that are of the image collection device to collect an image;
the controller sends an adjustment instruction to the image collection device, where the adjustment instruction indicates the image collection device to adjust the collection parameters based on target values of collection parameters in the adjustment instruction; and
the controller recognizes the signal identifier based on an image obtained after the image collection device adjusts the collection parameters, and controls driving of the intelligent vehicle based on the recognized signal identifier.

It should be understood that the processor 710 in this embodiment of this application may have a plurality of specific implementations. For example, the processor 710 may be a central processing unit (central processing unit, CPU) or a graphics processing unit (graphics processing unit, GPU), and the processor 710 may also be a single-core processor or a multi-core processor. The processor 710 may be a combination of a CPU and a hardware chip. The hardware chip may be an application-specific integrated circuit (application-specific integrated circuit, ASIC), a programmable logic device (PLD), or a combination thereof. The PLD may be a complex programmable logic device (CPLD), a field-programmable gate array (FPGA), a generic array logic (GAL), or any combination thereof. The processor 710 may also be implemented by independently using a logic device with a built-in processing logic, for example, an FPGA or a digital signal processor (digital signal processor, DSP).

The communication interface 720 may be a wired interface or a wireless interface, and is configured to communicate with another module or device. The wired interface may be an Ethernet interface, a controller area network (controller area network, CAN) interface, a local area network (local interconnect network, LIN) interface, or a FlexRay interface, and the wireless interface may be a cellular network interface, a wireless local area network interface, or the like. For example, the communication interface 720 in this embodiment of this application may be specifically configured to receive image data sent by the image collection device, receive an on/off period sent by the display apparatus, and the like.

The memory 730 may be a nonvolatile memory, for example, a read-only memory (read-only memory, ROM), a programmable read-only memory (PROM), or an erasable programmable read-only memory (EPROM), an electrically erasable programmable read-only memory (EEPROM) or a flash memory. Alternatively, the memory 730 may be a volatile memory. The volatile memory may be a random access memory (RAM) and is used as an external cache.

The memory 730 may also be configured to store instructions and data, so that the processor 710 invokes the instructions stored in the memory 730 to implement an operation performed by the processing unit 610, for example, the operation performed by the controller 110 in the foregoing method embodiment. In addition, the computing device 700 may include more or fewer components than those shown in FIG. 7, or may have different component configurations.

The bus 740 may be a CAN bus or another internal bus that implements interconnection between systems or devices in the vehicle. The bus 740 may be classified into an address bus, a data bus, a control bus, and the like. For ease of representation, only one bold line is used for representation in FIG. 7, but this does not mean that there is only one bus or only one type of bus.

Optionally, the computing device 700 may further include an input/output interface 750. The input/output interface 750 is connected to an input/output device, and is configured to receive input information and output an operation result.

It should be understood that the computing device 700 according to this embodiment of this application may correspond to the control apparatus 600 in the foregoing embodiment of this application, and may correspondingly perform corresponding operations in the method shown in FIG. 2. In addition, operations and/or functions of the modules in the control apparatus 600 are separately used to implement corresponding procedures of the methods in FIG. 1 to FIG. 5. For brevity, details are not described herein again.

An embodiment of this application further provides a non-transient computer storage medium. The computer storage medium stores instructions. When the instructions are run on a processor, the method steps in the foregoing method embodiments may be implemented. For specific implementations of the method steps performed by the processor in the computer storage medium, refer to specific operations in the foregoing method embodiments. Details are not described herein again.

In the foregoing embodiments, the description of each embodiment has respective focuses. For a part that is not described in detail in an embodiment, refer to related descriptions in other embodiments.

All or some of the foregoing embodiments may be implemented by using software, hardware, firmware, or any combination thereof. When the software is used to implement the embodiments, all or some of the foregoing embodiments may be implemented in a form of a computer program product. The computer program product includes one or more computer instructions. When the computer program instructions are loaded or executed on the computer, the procedures or functions according to the embodiments of this application are all or partially generated. The computer may be a general-purpose computer, a special-purpose computer, a computer network, or another programmable apparatus. The computer instructions may be stored in a computer-readable storage medium, or may be transmitted from one computer-readable storage medium to another computer-readable storage medium. For example, the computer instructions may be transmitted from a website, a computer, a server, or a data center to another website, computer, server, or data center in a wired manner (for example, a coaxial cable, an optical fiber, or a digital subscriber line) or in a wireless manner (for example, infrared, wireless, or microwave). The computer-readable storage medium may be any usable medium that can be accessed by a computer, or a data storage device such as a server or a data center that includes one or more usable medium sets. The usable medium may be a magnetic medium (for example, a floppy disk, a hard disk drive, or a magnetic tape), an optical medium, or a semiconductor medium. The semiconductor medium may be a solid-state drive (SSD).

The foregoing description is merely specific implementations of this application. Any variation or replacement readily figured out by a person skilled in the art based on the specific implementations provided in this application shall fall within the protection scope of this application.

## Claims

1. An intelligent vehicle control method, wherein the method comprises:
when a controller recognizes (S201) a display apparatus for a signal identifier, obtaining, by the controller from the display apparatus or from a cloud service data center, display parameters of the display apparatus, the display parameters comprises an on/off period of the display apparatus and duration in which the signal identifier is on in one on/off period, wherein the on/off period comprises duration in which the signal identifier is on and duration in which the signal identifier is off;
calculating (S202), by the controller, target values of collection parameters of an image collection device in an intelligent vehicle according to the display parameters of the
display apparatus, wherein the collection parameters of the image collection device are used to indicate a collection period, a quantity of exposure times, exposure duration, and exposure interval duration that are of the image collection device to collect an image;
sending (S202), by the controller, an adjustment instruction to the image collection device, wherein the adjustment instruction indicates the image collection device to adjust the collection parameters based on target values of collection parameters in the adjustment instruction; and
recognizing (S204), by the controller, the signal identifier based on an image obtained after the image collection device adjusts the collection parameters, and controlling (S205), by the controller, driving of the intelligent vehicle based on the recognized signal identifier.

2. The method according to claim 1, wherein when the controller recognizes the display apparatus for the signal identifier, the calculating (S202), by the controller, target values of collection parameters of an image collection device in an intelligent vehicle comprises:
obtaining, by the controller, an image obtained before the image collection device adjusts the collection parameters, performing, by the controller, signal identifier detection on the image obtained before the image collection device adjusts the collection parameters, and calculating, by the controller, the target values of the collection parameters of the image collection device in the intelligent vehicle when the signal identifier is detected; or
obtaining, by the controller, a distance between the intelligent vehicle and the display apparatus, and calculating, by the controller, the target values of the collection parameters of the image collection device in the intelligent vehicle when the distance is less than or equal to a preset distance, wherein the display apparatus is located in a heading direction along which the intelligent vehicle is driven.

3. The method according to claim 1 or 2, wherein the calculating (S202), by the controller, the target values of the collection parameters of the image collection device in the intelligent vehicle according to the display apparatus comprises:
determining, by the controller, the on/off period to be a collection period obtained after the image collection device adjusts the collection parameters, wherein the collection period is duration taken by the image collection device to collect one image;
determining, by the controller based on the collection period obtained after the image collection device adjusts the collection parameters, total exposure duration of the image collection device in one collection period, and the duration in which the signal identifier is on in one on/off period, a quantity of exposure times in one collection period obtained after the image collection device adjusts the collection parameters;
determining, by the controller based on the total exposure duration in one collection period and the quantity of exposure times in one collection period that are obtained after the image collection device adjusts the collection parameters, duration of each exposure obtained after the image collection device adjusts the collection parameters; and determining, by the controller based on the collection period, the total exposure duration, and the quantity of exposure times that are obtained after the image collection device adjusts the collection parameters, interval duration of each exposure obtained after the image collection device adjusts the collection parameters; and
generating, by the controller, the adjustment instruction based on the collection period, the duration of each exposure, the quantity of exposure times in one collection period, and the interval duration of each exposure that are obtained after the image collection device adjusts the collection parameters.

4. The method according to any one of claims 1 to 3, wherein the signal identifier is a traffic light, and the recognizing, by the controller, the signal identifier based on an image obtained after the image collection device adjusts the collection parameters, and controlling, by the controller, driving of the intelligent vehicle based on the recognized signal identifier comprises:
recognizing, by the controller, the traffic light based on the image obtained after the image collection device adjusts the collection parameters, to obtain a recognition result, wherein the recognition result comprises a red light, a green light, an amber light, and an unknown state, and a recognition result corresponding to each image is any one of the red light, the green light, the amber light, and the unknown state; and
determining, by the controller based on the recognition result and a previously determined status of the traffic light, a status of the traffic light in the image obtained after the image collection device adjusts the collection parameters, wherein the status of the traffic light comprises the red light, the green light, and the amber light, and a status of the traffic light corresponding to each image is any one of the red light, the green light, and the amber light.

5. An intelligent vehicle control apparatus (600), wherein the apparatus comprises:
a processing unit (610), configured to: calculate target values of collection parameters of an image collection device in an intelligent vehicle according to display parameters of
a display apparatus when recognizing the display apparatus for a signal identifier, wherein the collection parameters of the image collection device are used to indicate a collection period, a quantity of exposure times, exposure duration, and exposure interval duration that are of the image collection device to collect an image,
wherein an obtaining unit (630) is configured to obtain from the display apparatus or a cloud service data center an on/off period of the display apparatus and duration in which the signal identifier is on in one on/off period, wherein the on/off period comprises duration in which the signal identifier is on and duration in which the signal identifier is off; and
the processing unit (610) is configured to generate an adjustment instruction based on the target values of the collection parameters, wherein the adjustment instruction indicates the image collection device to adjust the collection parameters based on target values of collection parameters in the adjustment instruction; and
a sending unit (620), configured to send the adjustment instruction to the image collection device, wherein
the processing unit (610) is further configured to recognize the signal identifier based on an image obtained after the image collection device adjusts the collection parameters, and control driving of the intelligent vehicle based on the recognized signal identifier.

6. The apparatus (600) according to claim 5, wherein:
the obtaining unit (630) is configured to obtain an image obtained before the image collection device adjusts the collection parameters, wherein
the processing unit (610) is specifically configured to perform signal identifier detection on the image obtained before the image collection device adjusts the collection parameters, and calculate the target values of the collection parameters of the image collection device in the intelligent vehicle when the signal identifier is detected; or
the obtaining unit is configured to obtain a distance between the intelligent vehicle and the display apparatus; and
the processing unit is specifically configured to calculate the target values of the collection parameters of the image collection device in the intelligent vehicle by using the controller when the distance is less than or equal to a preset distance, wherein the display apparatus is located in a heading direction along which the intelligent vehicle is driven.

7. The apparatus (600) according to claim 5 or 6, wherein
the processing unit (630) is specifically configured to: determine the on/off period to be a collection period obtained after the image collection device adjusts the collection parameters, wherein the collection period is duration taken by the image collection device to collect one image;
determine, based on the collection period obtained after the image collection device adjusts the collection parameters, total exposure duration of the image collection device in one collection period, and the duration in which the signal identifier is on in one on/off period, a quantity of exposure times in one collection period obtained after the image collection device adjusts the collection parameters;
determine, based on the total exposure duration in one collection period and the quantity of exposure times in one collection period that are obtained after the image collection device adjusts the collection parameters, duration of each exposure obtained after the image collection device adjusts the collection parameters; and determine, based on the collection period, the total exposure duration, and the quantity of exposure times that are obtained after the image collection device adjusts the collection parameters, interval duration of each exposure obtained after the image collection device adjusts the collection parameters; and
generate the adjustment instruction based on the collection period, the duration of each exposure, the quantity of exposure times in one collection period, and the interval duration of each exposure that are obtained after the image collection device adjusts the collection parameters.

8. The apparatus (600) according to any one of claims 5 to 7, wherein the signal identifier is a traffic light, and the processing unit (610) is specifically configured to:
recognize the traffic light based on the image obtained after the image collection device adjusts the collection parameters, to obtain a recognition result, wherein the recognition result comprises a red light, a green light, an amber light, and an unknown state, and a recognition result corresponding to each image is any one of the red light, the green light, the amber light, and the unknown state; and
determine, based on the recognition result and a previously determined status of the traffic light, a status of the traffic light in the image obtained after the image collection device adjusts the collection parameters, wherein the status of the traffic light comprises the red light, the green light, and the amber light, and a status of the traffic light corresponding to each image is any one of the red light, the green light, and the amber light.

9. A computing device (700), comprising a processor (710) and a memory (730), wherein the memory is configured to store instructions, the processor is configured to execute the instructions, and when the processor executes the instructions, the processor performs the method according to any one of claims 1 to 4.

10. A non-transient computer-readable storage medium, wherein the computer-readable storage medium stores a computer program, and when the computer program is executed by a computing device, the method according to any one of claims 1 to 4 is implemented.

## Patentansprüche

1. Intelligentes Fahrzeugsteuerungsverfahren, wobei das Verfahren Folgendes umfasst:
wenn eine Steuerung eine Anzeigeeinrichtung für eine Signalkennung erkennt (S201), Erlangen von Anzeigeparametern der Anzeigeeinrichtung durch die Steuerung aus der Anzeigeeinrichtung oder aus einem Cloud-Service-Datenzentrum,
wobei die Anzeigeparameter eine Ein/Aus-Periode der Anzeigeeinrichtung und eine Dauer umfassen, in welcher die Signalkennung in einer Ein/Aus-Periode eingeschaltet ist, wobei die Ein/Aus-Periode eine Dauer, in welcher die Signalkennung eingeschaltet ist, und eine Dauer umfasst, in welcher die Signalkennung ausgeschaltet ist;
Berechnen (S202) von Zielwerten von Erfassungsparametern einer Bilderfassungsvorrichtung in einem intelligenten Fahrzeug durch die Steuerung gemäß den Anzeigeparametern der Anzeigeeinrichtung, wobei die Erfassungsparameter der Bilderfassungsvorrichtung verwendet werden, um eine Erfassungsperiode, eine Anzahl von Belichtungszeiten, eine Belichtungsdauer und eine Belichtungsintervalldauer anzugeben, die von der Bilderfassungsvorrichtung stammen, um ein Bild zu erfassen;
Senden (S202) einer Einstellanweisung durch die Steuerung an die Bilderfassungsvorrichtung, wobei die Einstellanweisung die Bilderfassungsvorrichtung anweist, die Erfassungsparameter basierend auf Zielwerten von Erfassungsparametern in der Einstellanweisung einzustellen; und
Erkennen (S204) der Signalkennung durch die Steuerung basierend auf einem Bild, das erlangt wird, nachdem die Bilderfassungsvorrichtung die Erfassungsparameter einstellt, und Steuern (S205) des Fahrens des intelligenten Fahrzeugs durch die Steuerung basierend auf der erkannten Signalkennung.

2. Verfahren nach Anspruch 1, wobei, wenn die Steuerung die Anzeigeeinrichtung für die Signalkennung erkennt, das Berechnen (S202) von Zielwerten von Erfassungsparametern einer Bilderfassungsvorrichtung in einem intelligenten Fahrzeug durch die Steuerung Folgendes umfasst:
Erlangen eines Bildes durch die Steuerung, das erlangt wird, bevor die Bilderfassungsvorrichtung die Erfassungsparameter einstellt, Durchführen einer Signalkennungsdetektion an dem Bild durch die Steuerung, das erlangt wird, bevor die Bilderfassungsvorrichtung die Erfassungsparameter einstellt, und Berechnen der Zielwerte der Erfassungsparameter der Bilderfassungsvorrichtung in dem intelligenten Fahrzeug durch die Steuerung, wenn die Signalkennung detektiert wird; oder
Erlangen eines Abstands zwischen dem intelligenten Fahrzeug und der Anzeigevorrichtung durch die Steuerung und Berechnen der Zielwerte der Erfassungsparameter der Bilderfassungsvorrichtung in dem intelligenten Fahrzeug durch die Steuerung, wenn der Abstand kleiner oder gleich einem voreingestellten Abstand ist, wobei sich die Anzeigevorrichtung in einer Fahrtrichtung befindet, entlang welcher das intelligente Fahrzeug gefahren wird.

3. Verfahren nach Anspruch 1 oder 2, wobei das Berechnen (S202) der Zielwerte der Erfassungsparameter der Bilderfassungsvorrichtung in dem intelligenten Fahrzeug gemäß der Anzeigevorrichtung durch die Steuerung Folgendes umfasst:
Bestimmen der Ein/Aus-Periode durch die Steuerung als Erfassungsperiode, die erlangt wird, nachdem die Bilderfassungsvorrichtung die Erfassungsparameter eingestellt hat, wobei die Erfassungsperiode eine Dauer ist, welche die Bilderfassungsvorrichtung beansprucht, um ein Bild zu erfassen; Bestimmen einer Gesamtbelichtungsdauer der Bilderfassungsvorrichtung in einer Erfassungsperiode durch die Steuerung basierend auf der Erfassungsperiode, die erlangt wird, nachdem die Bilderfassungsvorrichtung die Erfassungsparameter eingestellt hat, sowie der Dauer, in welcher die Signalkennung in einer Ein/Aus-Periode eingeschaltet ist, einer Anzahl von Belichtungszeiten in einer Erfassungsperiode, die erlangt wird, nachdem die Bilderfassungsvorrichtung die Erfassungsparameter eingestellt hat;
Bestimmen einer Dauer jeder Belichtung, die erlangt wird, nachdem die Bilderfassungsvorrichtung die Erfassungsparameter eingestellt hat, durch die Steuerung basierend auf der Gesamtbelichtungsdauer in einer Erfassungsperiode und der Anzahl von Belichtungszeiten in einer Erfassungsperiode, die erlangt werden, nachdem die Bilderfassungsvorrichtung die Erfassungsparameter eingestellt hat; und Bestimmen der Gesamtbelichtungsdauer und der Anzahl von Belichtungszeiten, die erlangt werden, nachdem die Bilderfassungsvorrichtung die Erfassungsparameter eingestellt hat, einer Intervalldauer jeder Belichtung, die erlangt wird, nachdem die Bilderfassungsvorrichtung die Erfassungsparameter eingestellt hat, durch die Steuerung basierend auf der Erfassungsperiode; und
Erzeugen der Einstellanweisung durch die Steuerung basierend auf der Erfassungsperiode, der Dauer jeder Belichtung, der Anzahl von Belichtungszeiten in einer Erfassungsperiode und der Intervalldauer jeder Belichtung, die erlangt werden, nachdem die Bilderfassungsvorrichtung die Erfassungsparameter eingestellt hat.

4. Verfahren nach einem der Ansprüche 1 bis 3, wobei die Signalkennung eine Ampel ist, und das Erkennen der Signalkennung durch die Steuerung basierend auf einem Bild, das erlangt wird, nachdem die Bilderfassungsvorrichtung die Erfassungsparameter eingestellt hat, und das Steuern des Fahrens des intelligenten Fahrzeugs durch die Steuerung basierend auf der erkannten Signalkennung Folgendes umfasst:
Erkennen der Ampel durch die Steuerung basierend auf dem Bild, das erlangt wird, nachdem die Bilderfassungsvorrichtung die Erfassungsparameter eingestellt hat, um ein Erkennungsergebnis zu erlangen, wobei das Erkennungsergebnis ein rotes Licht, ein grünes Licht, ein gelbes Licht und einen unbekannten Zustand umfasst, und ein Erkennungsergebnis entsprechend jedem Bild ein beliebiges von dem roten Licht, dem grünen Licht, dem gelben Licht und dem unbekannten Zustand ist; und
Bestimmen eines Status der Ampel in dem Bild, das erlangt wird, nachdem die Bilderfassungsvorrichtung die Erfassungsparameter eingestellt hat, durch die Steuerung basierend auf dem Erkennungsergebnis und einem zuvor bestimmten Status der Ampel, wobei der Status der Ampel das rote Licht, das grüne Licht und das gelbe Licht umfasst, und ein Status der Ampel entsprechend jedem Bild ein beliebiges von dem roten Licht, dem grünen Licht und dem gelben Licht ist.

5. Intelligente Fahrzeugsteuerungseinrichtung (600), wobei die Einrichtung Folgendes umfasst:
eine Verarbeitungseinheit (610), die dazu konfiguriert ist:
Zielwerte von Erfassungsparametern einer Bilderfassungsvorrichtung in einem intelligenten Fahrzeug gemäß Anzeigeparametern einer Anzeigeeinrichtung bei Erkennen der Anzeigeeinrichtung für eine Signalkennung zu berechnen, wobei die Erfassungsparameter der Bilderfassungsvorrichtung verwendet werden, um eine Erfassungsperiode, eine Anzahl von Belichtungszeiten, eine Belichtungsdauer und eine Belichtungsintervalldauer anzugeben, die von der Bilderfassungsvorrichtung stammen, um ein Bild zu erfassen,
wobei eine Erlangungseinheit (630) dazu konfiguriert ist, eine Ein/Aus-Periode der Anzeigevorrichtung und eine Dauer, in welcher die Signalkennung eingeschaltet ist, in einer Ein/Aus-Periode aus der Anzeigevorrichtung oder einem Cloud-Service-Datenzentrum zu erlangen, wobei die Ein/Aus-Periode eine Dauer, in welcher die Signalkennung eingeschaltet ist, und eine Dauer umfasst, in welcher die Signalkennung ausgeschaltet ist; und
die Verarbeitungseinheit (610) dazu konfiguriert ist, eine Einstellanweisung basierend auf den Zielwerten der Erfassungsparameter zu erzeugen, wobei die Einstellanweisung die Bilderfassungsvorrichtung anweist, die Erfassungsparameter basierend auf Zielwerten von Erfassungsparametern in der Einstellanweisung einzustellen; und
eine Sendeeinheit (620), die dazu konfiguriert ist, die Einstellanweisung an die Bilderfassungsvorrichtung zu senden,
wobei
die Verarbeitungseinheit (610) ferner dazu konfiguriert ist, die Signalkennung basierend auf einem Bild zu erkennen, das erlangt wird, nachdem die Bilderfassungsvorrichtung die Erfassungsparameter eingestellt hat, und das Fahren des intelligenten Fahrzeugs basierend auf der erkannten Signalkennung zu steuern.

6. Einrichtung (600) nach Anspruch 5, wobei:
die Erlangungseinheit (630) dazu konfiguriert ist, ein Bild zu erlangen, das erlangt wird, bevor die Bilderfassungsvorrichtung die Erfassungsparameter einstellt, wobei
die Verarbeitungseinheit (610) insbesondere dazu konfiguriert ist, eine Signalkennungsdetektion an dem Bild durchzuführen, das erlangt wird, bevor die Bilderfassungsvorrichtung die Erfassungsparameter einstellt, und die Zielwerte der Erfassungsparameter der Bilderfassungsvorrichtung in dem intelligenten Fahrzeug zu berechnen, wenn die Signalkennung detektiert wird; oder
die Erlangungseinheit dazu konfiguriert ist, einen Abstand zwischen dem intelligenten Fahrzeug und der Anzeigeeinrichtung zu erlangen; und
die Verarbeitungseinheit insbesondere dazu konfiguriert ist, die Zielwerte der Erfassungsparameter der Bilderfassungsvorrichtung in dem intelligenten Fahrzeug unter Verwendung der Steuerung zu berechnen, wenn der Abstand kleiner oder gleich einem voreingestellten Abstand ist, wobei sich die Anzeigevorrichtung in einer Fahrtrichtung befindet, entlang welcher das intelligente Fahrzeug gefahren wird.

7. Einrichtung (600) nach Anspruch 5 oder 6, wobei die Verarbeitungsvorrichtung (630) insbesondere dazu konfiguriert ist: die Ein/Aus-Periode als Erfassungsperiode zu bestimmen, die erlangt wird, nachdem die Bilderfassungsvorrichtung die Erfassungsparameter eingestellt hat, wobei die Erfassungsperiode eine Dauer ist, welche die Bilderfassungsvorrichtung beansprucht, um ein Bild zu erfassen; eine Gesamtbelichtungsdauer der Bilderfassungsvorrichtung in einer Erfassungsperiode basierend auf der Erfassungsperiode, die erlangt wird, nachdem die Bilderfassungsvorrichtung die Erfassungsparameter eingestellt hat, sowie die Dauer, in welcher die Signalkennung in einer Ein/Aus-Periode eingeschaltet ist, eine Anzahl von Belichtungszeiten in einer Erfassungsperiode, die erlangt wird, nachdem die Bilderfassungsvorrichtung die Erfassungsparameter eingestellt hat, zu bestimmen;
eine Dauer jeder Belichtung, die erlangt wird, nachdem die Bilderfassungsvorrichtung die Erfassungsparameter eingestellt hat, basierend auf der Gesamtbelichtungsdauer in einer Erfassungsperiode und der Anzahl von Belichtungszeiten in einer Erfassungsperiode zu bestimmen, die erlangt werden, nachdem die Bilderfassungsvorrichtung die Erfassungsparameter eingestellt hat; und die Gesamtbelichtungsdauer und die Anzahl von Belichtungszeiten, die erlangt werden, nachdem die Bilderfassungsvorrichtung die Erfassungsparameter eingestellt hat, eine Intervalldauer jeder Belichtung, die erlangt wird, nachdem die Bilderfassungsvorrichtung die Erfassungsparameter eingestellt hat, basierend auf der Erfassungsperiode zu bestimmen; und
die Einstellanweisung basierend auf der Erfassungsperiode, der Dauer jeder Belichtung, der Anzahl von Belichtungszeiten in einer Erfassungsperiode und der Intervalldauer jeder Belichtung, die erlangt werden, nachdem die Bilderfassungsvorrichtung die Erfassungsparameter eingestellt hat, zu erzeugen.

8. Einrichtung (600) nach einem der Ansprüche 5 bis 7, wobei die Signalkennung eine Ampel ist und die Verarbeitungseinheit (610) insbesondere dazu konfiguriert ist:
die Ampel basierend auf dem Bild zu erkennen, das erlangt wird, nachdem die Bilderfassungsvorrichtung die Erfassungsparameter eingestellt hat, um ein Erkennungsergebnis zu erlangen, wobei das Erkennungsergebnis ein rotes Licht, ein grünes Licht, ein gelbes Licht und einen unbekannten Zustand umfasst, und ein Erkennungsergebnis entsprechend jedem Bild ein beliebiges von dem roten Licht, dem grünen Licht, dem gelben Licht und dem unbekannten Zustand ist; und
einen Status der Ampel in dem Bild, das erlangt wird, nachdem die Bilderfassungsvorrichtung die Erfassungsparameter eingestellt hat, basierend auf dem Erkennungsergebnis und einem zuvor bestimmten Status der Ampel zu bestimmen, wobei der Status der Ampel das rote Licht, das grüne Licht und das gelbe Licht umfasst, und ein Status der Ampel entsprechend jedem Bild ein beliebiges von dem roten Licht, dem grünen Licht und dem gelben Licht ist.

9. Rechenvorrichtung (700), umfassend einen Prozessor (710) und einen Speicher (730), wobei der Speicher dazu konfiguriert ist, Anweisungen zu speichern, der Prozessor dazu konfiguriert ist, die Anweisungen auszuführen, und, wenn der Prozessor die Anweisungen ausführt, der Prozessor das Verfahren nach einem der Ansprüche 1 bis 4 durchführt.

10. Nicht transientes computerlesbares Speichermedium, wobei das computerlesbare Speichermedium ein Computerprogramm speichert, und, wenn das Computerprogramm durch eine Rechenvorrichtung ausgeführt wird, das Verfahren nach einem der Ansprüche 1 bis 4 implementiert wird.

## Revendications

1. Procédé de commande pour un véhicule intelligent, dans lequel le procédé comprend :
lorsqu'un dispositif de commande reconnaît (S201) un appareil d'affichage pour un identifiant de signal, l'obtention, par le dispositif de commande à partir de l'appareil d'affichage ou d'un centre de données de service cloud, des paramètres d'affichage de l'appareil d'affichage, les paramètres d'affichage comprennent une période marche/arrêt de l'appareil d'affichage et la durée pendant laquelle l'identifiant de signal est activé dans une période marche/arrêt, dans lequel la période marche/arrêt comprend la durée pendant laquelle l'identifiant de signal est activé et la durée pendant laquelle l'identifiant de signal est désactivé ;
le calcul (S202), par le dispositif de commande, des valeurs cibles des paramètres de collecte d'un dispositif de collecte d'images dans un véhicule intelligent selon les paramètres d'affichage de l'appareil d'affichage, dans lequel les paramètres de collecte du dispositif de collecte d'images sont utilisés pour indiquer une période de collecte, un nombre de temps d'exposition, une durée d'exposition et une durée d'intervalle d'exposition du dispositif de collecte d'images pour collecter une image ;
l'envoi (S202), par le dispositif de commande, d'une instruction de réglage au dispositif de collecte d'images, dans lequel l'instruction de réglage indique au dispositif de collecte d'images d'ajuster les paramètres de collecte sur la base des valeurs cibles des paramètres de collecte dans l'instruction de réglage ; et
la reconnaissance (S204), par le dispositif de commande, de l'identifiant du signal sur la base d'une image obtenue après ajustement des paramètres de collecte par le dispositif de collecte d'images, et la commande (S205), par le dispositif de commande, de la conduite du véhicule intelligent sur la base de l'identifiant de signal reconnu.

2. Procédé selon la revendication 1, dans lequel, lorsque le dispositif de commande reconnaît l'appareil d'affichage pour l'identifiant de signal, le calcul (S202), par le dispositif de commande, des valeurs cibles des paramètres de collecte d'un dispositif de collecte d'images dans un véhicule intelligent comprend :
l'obtention, par le dispositif de commande, d'une image obtenue avant que le dispositif de collecte d'images n'ajuste les paramètres de collecte, la réalisation, par le dispositif de commande, d'une détection d'identifiant de signal sur l'image obtenue avant que le dispositif de collecte d'images n'ajuste les paramètres de collecte, et le calcul, par le dispositif de commande, des valeurs cibles des paramètres de collecte du dispositif de collecte d'images dans le véhicule intelligent lorsque l'identifiant de signal est détecté ; ou
l'obtention, par le dispositif de commande, d'une distance entre le véhicule intelligent et l'appareil d'affichage, et le calcul, par le dispositif de commande, des valeurs cibles des paramètres de collecte du dispositif de collecte d'images du véhicule intelligent lorsque la distance est inférieure ou égale à une distance prédéfinie, dans lequel l'appareil d'affichage est situé dans une direction de déplacement selon laquelle le véhicule intelligent se déplace.

3. Procédé selon la revendication 1 ou 2, dans lequel le calcul (S202), par le dispositif de commande, des valeurs cibles des paramètres de collecte du dispositif de collecte d'images dans le véhicule intelligent selon l'appareil d'affichage comprend :
la détermination, par le dispositif de commande, de la période marche/arrêt comme étant une période de collecte obtenue après ajustement des paramètres de collecte par le dispositif de collecte d'images, dans lequel la période de collecte est la durée prise par le dispositif de collecte d'images pour collecter une image ;
la détermination, par le dispositif de commande sur la base de la période de collecte obtenue après ajustement des paramètres de collecte par le dispositif de collecte d'images, de la durée totale d'exposition du dispositif de collecte d'images lors d'une période de collecte, et de la durée pendant laquelle l'identifiant de signal est activé dans une période marche/arrêt, d'un nombre de temps d'exposition lors d'une période de collecte obtenue après ajustement des paramètres de collecte par le dispositif de collecte d'images ;
la détermination, par le dispositif de commande sur la base de la durée totale d'exposition lors d'une période de collecte et du nombre de temps d'expositions lors d'une période de collecte obtenus après ajustement des paramètres de collecte par le dispositif de collecte d'images, de la durée de chaque exposition obtenue après ajustement des paramètres de collecte par le dispositif de collecte d'images ; et la détermination, par le dispositif de commande sur la base de la période de collecte, de la durée totale d'exposition et du nombre de temps d'expositions obtenus après ajustement des paramètres de collecte par le dispositif de collecte d'images, de la durée de l'intervalle entre chaque exposition obtenue après ajustement des paramètres de collecte par le dispositif de collecte d'images ; et
la génération, par le dispositif de commande, de l'instruction de réglage sur la base de la période de collecte, de la durée de chaque exposition, du nombre de temps d'exposition lors d'une période de collecte et de la durée de l'intervalle de chaque exposition, qui sont obtenus après ajustement des paramètres de collecte par le dispositif de collecte d'images.

4. Procédé selon l'une quelconque des revendications 1 à 3, dans lequel l'identifiant de signal est un feu de circulation, et la reconnaissance, par le dispositif de commande, de l'identifiant de signal sur la base d'une image obtenue après ajustement des paramètres de collecte par le dispositif de collecte d'images, et la commande, par le dispositif de commande, de la conduite du véhicule intelligent sur la base de l'identifiant de signal reconnu comprend :
la reconnaissance, par le dispositif de commande, du feu de circulation sur la base de l'image obtenue après ajustement des paramètres de collecte par le dispositif de collecte d'images, afin d'obtenir un résultat de reconnaissance, dans lequel le résultat de reconnaissance comprend un feu rouge, un feu vert, un feu orange et un état inconnu, et un résultat de reconnaissance correspondant à chaque image est l'un quelconque du feu rouge, du feu vert, du feu orange et de l'état inconnu ; et
la détermination, par le dispositif de commande, sur la base du résultat de reconnaissance et d'un état préalablement déterminé du feu de circulation, de l'état du feu de circulation dans l'image obtenue après ajustement des paramètres de collecte par le dispositif de collecte d'images, dans lequel l'état du feu de circulation comprend le feu rouge, le feu vert et le feu orange, et l'état du feu de circulation correspondant à chaque image est l'un quelconque du feu rouge, du feu vert et du feu orange.

5. Appareil de commande pour un véhicule intelligent (600), dans lequel l'appareil comprend :
une unité de traitement (610), configurée pour : calculer des valeurs cibles des paramètres de collecte d'un dispositif de collecte d'images dans un véhicule intelligent selon des paramètres d'affichage d'un appareil d'affichage lors de la reconnaissance de l'appareil d'affichage pour un identifiant de signal, dans lequel les paramètres de collecte du dispositif de collecte d'images sont utilisés pour indiquer une période de collecte, un nombre de temps d'exposition, une durée d'exposition et une durée d'intervalle d'exposition du dispositif de collecte d'images pour collecter une image,
dans lequel une unité d'obtention (630) est configurée pour obtenir de l'appareil d'affichage ou d'un centre de données de service cloud une période marche/arrêt de l'appareil d'affichage et la durée pendant laquelle l'identifiant du signal est activé dans une période marche/arrêt, dans lequel la période marche/arrêt comprend la durée pendant laquelle l'identifiant du signal est activé et la durée pendant laquelle l'identifiant du signal est désactivé ; et
l'unité de traitement (610) est configurée pour générer une instruction de réglage sur la base des valeurs cibles des paramètres de collecte, dans lequel l'instruction de réglage indique au dispositif de collecte d'images d'ajuster les paramètres de collecte sur la base des valeurs cibles des paramètres de collecte dans l'instruction de réglage ; et
une unité d'envoi (620), configurée pour envoyer l'instruction de réglage au dispositif de collecte d'images, dans lequel l'unité de traitement (610) est en outre configurée pour reconnaître l'identifiant de signal sur la base d'une image obtenue après ajustement des paramètres de collecte par le dispositif de collecte d'images, et pour commander la conduite du véhicule intelligent sur la base de l'identifiant de signal reconnu.

6. Appareil (600) selon la revendication 5, dans lequel :
l'unité d'obtention (630) est configurée pour obtenir une image obtenue avant que le dispositif de collecte d'images n'ajuste les paramètres de collecte, dans lequel
l'unité de traitement (610) est spécifiquement configurée pour réaliser la détection de l'identifiant du signal sur l'image obtenue avant que le dispositif de collecte d'images n'ajuste les paramètres de collecte, et pour calculer les valeurs cibles des paramètres de collecte du dispositif de collecte d'images dans le véhicule intelligent lorsque l'identifiant du signal est détecté ; ou
l'unité d'obtention est configurée pour obtenir la distance entre le véhicule intelligent et l'appareil d'affichage ; et
l'unité de traitement est spécifiquement configurée pour calculer les valeurs cibles des paramètres de collecte du dispositif de collecte d'images dans le véhicule intelligent en utilisant le dispositif de commande lorsque la distance est inférieure ou égale à une distance prédéfinie, dans lequel l'appareil d'affichage est situé dans la direction de déplacement selon laquelle le véhicule intelligent se déplace.

7. Appareil (600) selon la revendication 5 ou 6, dans lequel l'unité de traitement (630) est spécifiquement configurée pour :
déterminer la période marche/arrêt comme étant une période de collecte obtenue après ajustement des paramètres de collecte par le dispositif de collecte d'images, dans lequel la période de collecte est la durée prise par le dispositif de collecte d'images pour collecter une image ;
déterminer, sur la base de la période de collecte obtenue après ajustement des paramètres de collecte par le dispositif de collecte d'images, de la durée totale d'exposition du dispositif de collecte d'images lors d'une période de collecte, et de la durée pendant laquelle l'identifiant de signal est activé dans une période marche/arrêt, un nombre de temps d'exposition lors d'une période de collecte obtenue après ajustement des paramètres de collecte par le dispositif de collecte d'images ;
déterminer, sur la base de la durée totale d'exposition lors d'une période de collecte et du nombre de temps d'expositions lors d'une période de collecte obtenus après ajustement des paramètres de collecte par le dispositif de collecte d'images, la durée de chaque exposition obtenue après ajustement des paramètres de collecte par le dispositif de collecte d'images ;
et déterminer, sur la base de la période de collecte, de la durée totale d'exposition et du nombre de temps d'expositions obtenus après ajustement des paramètres de collecte par le dispositif de collecte d'images, la durée de l'intervalle entre chaque exposition obtenue après ajustement des paramètres de collecte par le dispositif de collecte d'images ; et
générer l'instruction de réglage sur la base de la période de collecte, de la durée de chaque exposition, du nombre de temps d'exposition lors d'une période de collecte et de la durée de l'intervalle de chaque exposition, qui sont obtenus après ajustement des paramètres de collecte par le dispositif de collecte d'images.

8. Appareil (600) selon l'une quelconque des revendications 5 à 7, dans lequel l'identifiant de signal est un feu de circulation, et l'unité de traitement (610) est spécifiquement configurée pour :
reconnaître le feu de circulation sur la base de l'image obtenue après ajustement des paramètres de collecte par le dispositif de collecte d'images, afin d'obtenir un résultat de reconnaissance, dans lequel le résultat de reconnaissance comprend un feu rouge, un feu vert, un feu orange et un état inconnu, et un résultat de reconnaissance correspondant à chaque image est l'un quelconque du feu rouge, du feu vert, du feu orange et de l'état inconnu ; et
déterminer, sur la base du résultat de reconnaissance et d'un état préalablement déterminé du feu de circulation, l'état du feu de circulation dans l'image obtenue après ajustement des paramètres de collecte par le dispositif de collecte d'images, dans lequel l'état du feu de circulation comprend le feu rouge, le feu vert et le feu orange, et l'état du feu de circulation correspondant à chaque image est l'un quelconque du feu rouge, du feu vert et du feu orange.

9. Dispositif informatique (700), comprenant un processeur (710) et une mémoire (730), dans lequel la mémoire est configurée pour stocker des instructions, le processeur est configuré pour exécuter les instructions, et lorsque le processeur exécute les instructions, le processeur réalise le procédé selon l'une quelconque des revendications 1 à 4.

10. Support de stockage non transitoire lisible par ordinateur, dans lequel le support de stockage lisible par ordinateur stocke un programme informatique, et lorsque le programme informatique est exécuté par un dispositif informatique, le procédé selon l'une quelconque des revendications 1 à 4 est mis en œuvre.
